# EUROPÄISCHE PATENTANMELDUNG

(11) **EP 3 663 594 A1**
(43) Veröffentlichungstag der Anmeldung: **10.06.2020**
(21) Anmeldenummer: 19020670.6
(22) Anmeldetag: 03.12.2019
(51) Int. Cl.: F16B 9/00, F16B 35/00, F16B 39/32, B21D 28/34, F16B 9/02

(54) **ELEMENT-WECHSELSYSTEM; VERFAHREN ZUM WECHSELN EINES ELEMENTS EINES WERKZEUGS**

(30) Priorität: 06.12.2018 DE 102018131158
(71) Anmelder: Gebr. Eberhard GmbH & Co. KG., 74080 Heilbronn (DE)
(72) Erfinder: HENNIGE, Herbert, 74912 Kirchhardt-Berwangen (DE)
(74) Vertreter: Patentanwälte Schuster, Müller & Partner mbB

(57) **Zusammenfassung**

Es werden ein Element-Wechselsystem (1) und ein Verfahren zum Wechseln eines Elements (4) eines Werkzeugs, vorgeschlagen, durch die ohne einen konstruktiven Aufwand ein kostengünstiges System zur Verfügung gestellt werden kann.

## Beschreibung

### Stand der Technik

Die Erfindung geht aus von einem Element-Wechselsystem, nach der Gattung des Anspruchs 1, und einem Verfahren zum Wechseln eines Elements eines Werkzeugs, nach der Gattung des Anspruchs 12.

Element-Wechselsysteme gehören seit langem zum Stand der Technik, da z.B. in Stanz- und Umformwerkzeugen aktive Elemente eines Werkzeugs, wie der Schneid- oder Umformstempel, im eingebauten Zustand des Werkzeugs aus Verschleißgründen getauscht werden müssen. Die zum Stand der Technik gehörenden Element-Wechselsysteme, wie sie z.B. in der DE 602 04 941 T2, die auch eine Keilverriegelung beschreibt, die allerdings einen großen Platzbedarfs erfordert und bei der ein Ausrichten und Nachschleifen nicht möglich ist, oder der US 2 136 190 A offenbart werden, weisen zur Fixierung des Stempels in der Regel als Befestigungsmittel eine Kugelsicherung auf, die zum Lösen des Stempels aus der Halteplatte durch ein Kugelauslösewerkzeug gelöst werden kann. Nachteilig ist hierbei dar konstruktive Aufwand, der einer kostengünstigen Bereitstellung eines Element-Wechselsystems entgegensteht.

Aufgabe der Erfindung ist es daher eine Element-Wechselsystem sowie ein Verfahren zum Wechseln eines Elements eines Werkzeugs bereitzustellen, durch die die Nachteile des Standes der Technik überwunden werden.

### Die Erfindung und ihre Vorteile

Das erfindungsgemäße Element-Wechselsystem, mit den Merkmalen des Anspruchs 1, und das erfindungsgemäße Verfahren zum Wechseln eines Elements eines Werkzeugs, mit den Merkmalen des Anspruchs 12, haben demgegenüber den Vorteil, dass mit deutlich geringerem konstruktiven Aufwand ein kostengünstiges System zur Verfügung gestellt werden kann.

Nach einer vorteilhaften Ausgestaltung des erfindungsgemäßen Elementwechsel-Systems wird durch einen im Bereich des Innengewindes der Bohrung für das Befestigungsmittel angeordneten Überschneidungsbereich das Innengewinde um weniger als 50% reduziert.

Nach einer zusätzlichen vorteilhaften Ausgestaltung des erfindungsgemäßen Elementwechsel-Systems ist das Befestigungsmittel ein Gewindestift, insbesondere eine Madenschraube.

Nach einer zusätzlichen vorteilhaften Ausgestaltung des erfindungsgemäßen Elementwechsel-Systems weist das Befestigungsmittel mindestens eine Ausdrehsicherung auf.

Nach einer diesbezüglichen vorteilhaften Ausgestaltung des erfindungsgemäßen Elementwechsel-Systems ist die Ausdrehsicherung mindestens ein Kunststoffstreifen (Kunststoffsicherungsstreifen). Bevorzugt ist der Kunststoffstreifen ein Nylonstreifen.

Nach einer zusätzlichen vorteilhaften Ausgestaltung des erfindungsgemäßen Elementwechsel-Systems weist das Element eine Ausnehmung auf. Bevorzugt ist die Ausnehmung eine erodierte Ausnehmung. Bevorzugt erfolgt die Erodierung der Ausnehmung mit einer Elektrode, die eine Schrupp- und Schlichtform umfasst. Denkbar ist auch, dass die Ausnehmung gefräst oder mit einem sonstigen Metallbearbeitungsverfahren erstellt wird. Ein Vorteil der Ausnehmung liegt darin, dass das Element nur in einer Position in der Halteplatte fixiert werden kann, wodurch ein positionsgenaues Einbau möglich ist und zudem das Element gegen Verdrehen gesichert ist. Bevorzugt ist die Länge des Befestigungsmittels kleiner als die Länge der Ausnehmung und die Position der Ausnehmung auf der Längsachse des Elements so ausgeführt, so dass ein Formschluss zwischen dem Befestigungsmittel und der Gewinde-Bohrung des Befestigungsmittels entstehen kann.

Nach einer zusätzlichen vorteilhaften Ausgestaltung des erfindungsgemäßen Elementwechsel-Systems ist das Element ein aktives Element, insbesondere ein aktives Element in einem Werkzeug oder in einer Vorrichtung.

Nach einer zusätzlichen vorteilhaften Ausgestaltung des erfindungsgemäßen Elementwechsel-Systems ist das Element eine Normalie, also ein nach einem bestimmten System vereinheitlichtes Bauelement, welches als Ausgangsprodukt sehr günstig ist.

Nach einer zusätzlichen vorteilhaften Ausgestaltung des erfindungsgemäßen Elementwechsel-Systems ist das Element zylindrisch. Das Element weist somit keinen Kopf auf.

Nach einer zusätzlichen vorteilhaften Ausgestaltung des erfindungsgemäßen Elementwechsel-Systems ist das Element ein Stempel. Bevorzugt ist der Stempel ein sogenannter B-Stempel oder ein Positionierelement.

Nach einer diesbezüglichen vorteilhaften Ausgestaltung des erfindungsgemäßen Elementwechsel-Systems ist der Stempel ein Schneidstempel.

Nach einer vorteilhaften Ausgestaltung des erfindungsgemäßen Verfahrens zum Wechseln eines Elements eines Werkzeugs, das durch ein Elementwechsel-System fixiert ist, wobei zum Lösen des Elements aus einer in einer Halteplatte angeordneten Elementaufnahmebohrung ein Befestigungsmittel aus einer Bohrung für das Befestigungsmittel, die zumindest teilweise ein Innengewinde aufweist, zumindest teilweise herausgeschraubt wird, um nach einer Entnahme des Elements ein Element in die Elementaufnahmebohrung einzusetzen, um anschließend das Befestigungsmittel zur Fixierung des Elements in die Bohrung für das Befestigungsmittel einzuschrauben, wobei sich die Elementaufnahmebohrung, die eine Längsachse aufweist, und die Bohrung für das Befestigungsmittel, die eine Längsachse und eine Tiefe aufweist, zumindest teilweise entlang der Tiefe der Bohrung für das Befestigungsmittel in einem Überschneidungsbereich überschneiden und wobei der Überschneidungsbereich zumindest teilweise im Bereich des Innengewindes der Bohrung für das Befestigungsmittel angeordnet ist, deren Längsachse zu der Längsachse der Elementaufnahmebohrung parallel ausgerichtet ist und das Befestigungsmittel im eingeschraubten Zustand in direktem Kontakt zum Element steht, so dass das Einschrauben des Befestigungsmittels, das zumindest teilweise ein Aussengewinde aufweist, einen Formschluss zwischen dem Element und dem Aussengewinde und der Spitze des Befestigungsmittels bewirkt, wird als Element ein aktives Element, insbesondere ein aktives Element in einem Werkzeug oder in einer Vorrichtung, eingesetzt.

Nach einer zusätzlichen vorteilhaften Ausgestaltung des erfindungsgemäßen Verfahrens wird als Element ein Stempel, insbesondere ein B-Stempel oder ein Positionierelement, eingesetzt.

Nach einer zusätzlichen vorteilhaften Ausgestaltung des erfindungsgemäßen Verfahrens wird das Element des Werkzeugs bei einem Stanz- oder Umformwerkzeug eingesetzt.

Nach einer zusätzlichen vorteilhaften Ausgestaltung des erfindungsgemäßen Verfahrens wird als Element-Wechselsystem ein Element-Wechselsystem, gemäß einem der Ansprüche 1 bis 11, eingesetzt.

Weitere Vorteile und vorteilhafte Ausgestaltung der Erfindung sind der nachfolgenden Beschreibung, der Zeichnung und den Ansprüchen entnehmbar.

### Zeichnung

Ein bevorzugtes Ausführungsbeispiel des erfindungsgemäßen Gegenstands ist in der Zeichnung dargestellt und wird im Folgenden näher erläutert. Es zeigen
- Fig. 1: eine Aufsicht auf ein erfindungsgemäßes Element-Wechselsystem,
- Fig. 2: eine Seitenansicht auf das erfindungsgemäße Element-Wechselsystem, gemäß Fig. 1,
- Fig. 3: eine Schnittansicht des erfindungsgemäßen Element-Wechselsystems entlang der Linie A-A aus Fig. 2,
- Fig. 4: eine Seitenansicht auf ein Element,
- Fig. 5: eine Schnittansicht des Elements entlang der Linie B-B aus Fig. 4,
- Fig. 6: eine Schnittansicht des Elements entlang der Linie C-C aus Fig. 4,
- Fig. 7: eine Seitenansicht eines Befestigungsmittels und
- Fig. 8: eine perspektivische Ansicht eines Befestigungsmittels.

### Beschreibung des Ausführungsbeispiels

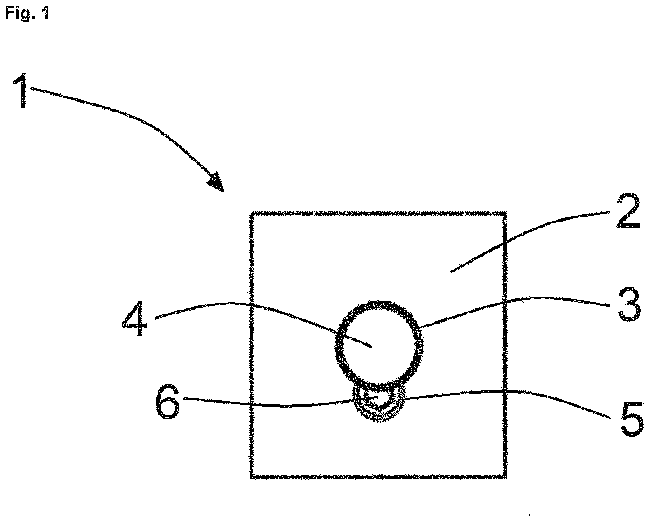

Fig. 1 zeigt eine Aufsicht auf ein erfindungsgemäßes Element-Wechselsystem 1. Das Element-Wechselsystem 1 weist eine Halteplatte 2 auf, in der eine Elementaufnahmebohrung 3 zur Aufnahme eines Elements 4 und eine Bohrung 5 für ein Befestigungsmittel 6, die zumindest teilweise ein Innengewinde aufweist, angeordnet ist. Da sich die Elementaufnahmebohrung 3 und die Bohrung 5 für das Befestigungsmittel 6, das zumindest teilweise ein Aussengewinde aufweist, überschneiden und der Überschneidungsbereich zumindest teilweise im Bereich des Innengewindes der Bohrung 5 für das Befestigungsmittel 6 angeordnet ist, wird durch Einschrauben des Befestigungsmittels 6 in die Bohrung 5 ein Formschluss zwischen dem Element 4 und dem Aussengewinde des Befestigungsmittels 6 bewirkt. Erfindungsgemäß wird der Überlappungsbereich derart gewählt, dass mehr als die Hälfte der Bohrung 5 erhalten bleiben, so dass weniger als 50% des Innengewindes der Bohrung 5 entfallen, wodurch ein fester Halt des in die Bohrung 5 eingeschraubten Befestigungsmittels 6 trotz des Überlappungsbereichs gewährleistet ist. Das erfindungsgemäßes Element-Wechselsystem 1 hat neben der günstigen Anschaffung und Montage den Vorteil, dass nur ein geringer Platzbedarf in der Halteplatte 2 notwendig ist, ein Längenausgleich bei Nachschliff möglich ist, ein geringer Platzbedarf im Aufbau erforderlich ist, da kein Halte- oder Montageblock eingesetzt werden muss.

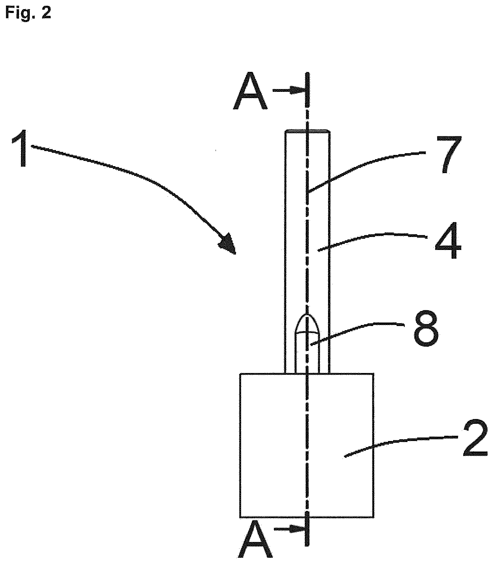

Fig. 2 zeigt eine Seitenansicht auf das erfindungsgemäße Element-Wechselsystem 1, gemäß Fig. 1. Das Element 4, das in die Elementaufnahmebohrung, die eine Längsachse 7 aufweist, eingesetzt ist, weist eine Ausnehmung 8, die zur Aufnahme des Befestigungsmittels 6 dient, auf. Die Ausnehmung 8 misst bevorzugt 1,5 mm bis 2,5 mm. Die Tiefe der Ausnehmung 8 ergibt sich bevorzugt aus dem Durchmesser des Gewindestifts abzüglich einer halben Schlüsselweite. Beispielsweise beträgt bei M3 die Schlüsselweite, also der Kantenabstand des Innensechskants), 1,5 mm, wodurch sich die Hälfte mit 0,75 mm berechnet.

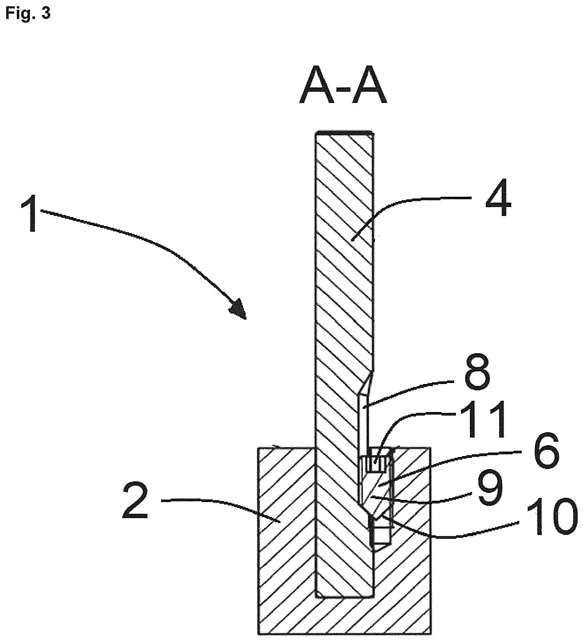

Fig. 3 zeigt eine Schnittansicht des erfindungsgemäßen Element-Wechselsystems entlang der Linie A-A aus Fig. 2. In dieser Schnittansicht wird deutlich, dass das Befestigungsmittel 6 aufgrund des Überlappungsbereichs im eingeschraubten Zustand direkten Kontakt zum Element 4 hat. Beispielhaft ist das Befestigungsmittel 6 als Gewindestift, insbesondere als Madenschraube 9, dargestellt, die mit einer 90°-Spitze 10 und einem Innensechskant 11 ausgestattet ist. Denkbar wären auch andere Ausführungen eines Befestigungsmittels 6 und/oder andere Winkel der Spitze.

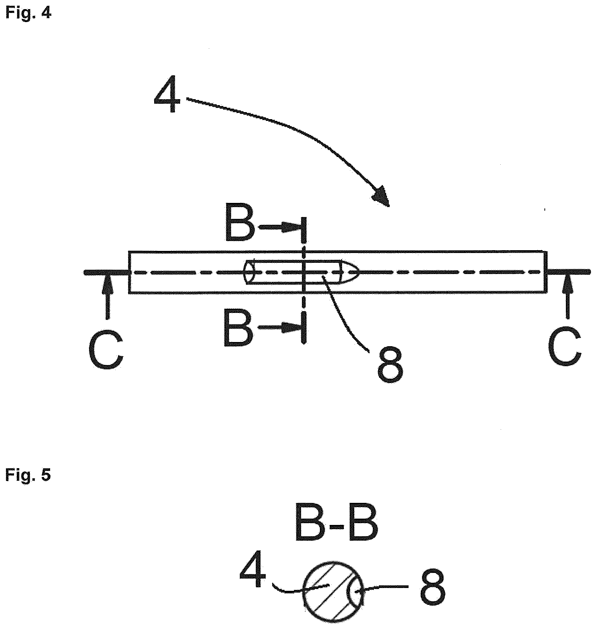

Fig. 4 zeigt eine Seitenansicht auf ein Element 4.

Fig. 5 zeigt eine Schnittansicht des Elements 4 entlang der Linie B-B aus Fig. 4.

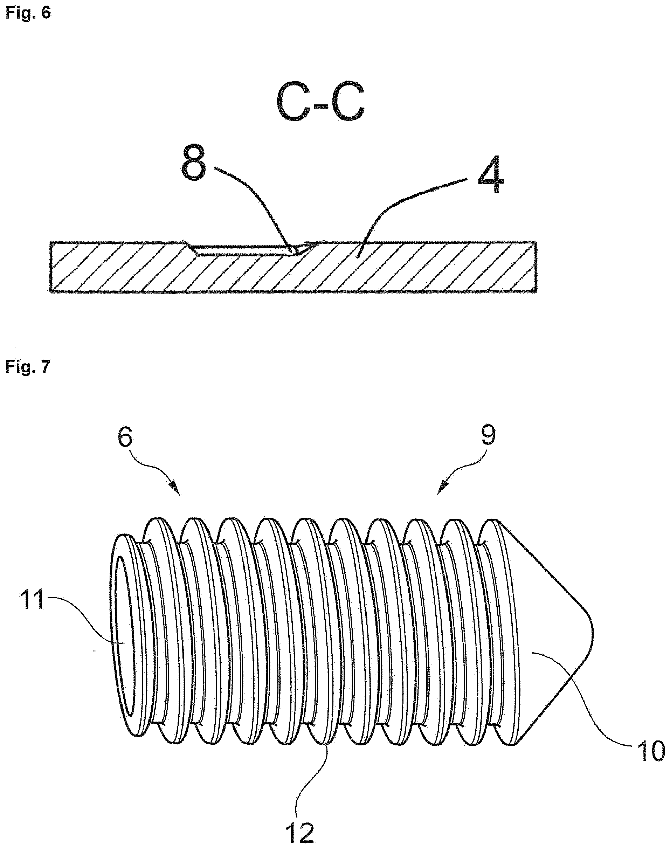

Fig. 6 zeigt eine Schnittansicht des Elements 4 entlang der Linie C-C aus Fig. 4. Bevorzugt weist die Ausnehmung 8 an ihrem einen Ende einen Winkel, der abhängig von dem Winkel der Spitze des Befestigungsmittels 6 ist, von 45° und an ihrem anderen Ende einen Winkel, der den Eingriff eines Werkzeugs zum Anziehen oder Lösen des Befestigungsmittels 6 erleichtert, von 30° auf.

Fig. 7 zeigt eine Seitenansicht eines Befestigungsmittels 6, das mit dem Aussengewinde 12 als Madenschraube 9 ausgestaltet ist. Denkbar wäre auch, dass das Befestigungsmittels 6 statt der 90°-Spitze 10 eine andere Spitze oder keine Spitze aufweist.

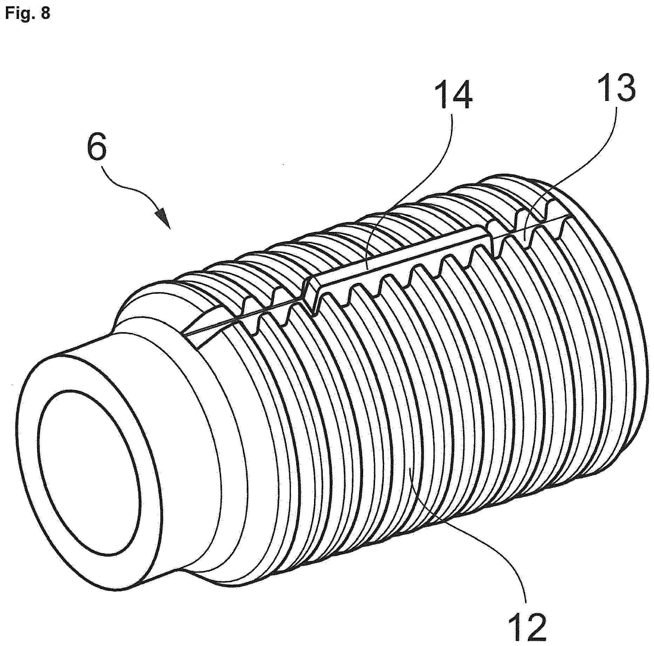

Fig. 8 zeigt eine perspektivische Ansicht eines Befestigungsmittels 6. Bei dieser Ausführung des Befestigungsmittels 6 weist das Befestigungsmittel 6 eine Nut 13 auf, in der ein Kunststoffsicherungsstreifen 14 (z.B. Nylon) eingelegt ist. Der Kunststoffsicherungsstreifen 14 dient zur Sicherung des Befestigungsmittels 6 gegen ein sich selbst Ausdrehen aus dem Innengewinde der Bohrung 5. Denkbar wäre auch, dass das Befestigungsmittels 6, das in Fig. 8 ohne Spitze dargestellt ist, eine Spitze, insbesondere eine 90°-Spitze aufweist.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Element-Wechselsystem
- 2: Halteplatte
- 3: Elementaufnahmebohrung
- 4: Element
- 5: Bohrung
- 6: Befestigungsmittel
- 7: Längsachse
- 8: Ausnehmung
- 9: Madenschraube
- 10: 90°-Spitze
- 11: Innensechskant
- 12: Aussengewinde
- 13: Nut
- 14: Kunststoffsicherungsstreifen

## Patentansprüche

1. Element-Wechselsystem (1),
- mit einer Halteplatte (2),
- mit einem Element (4), das lösbar in einer Elementaufnahmebohrung (3) der Halteplatte (2) angeordnet ist, wobei die Halteplatte (2) eine Bohrung (5) für ein Befestigungsmittel (6) aufweist, wobei die Bohrung (5) für das Befestigungsmittel (6) zumindest teilweise ein Innengewinde aufweist, wodurch das Befestigungsmittel (6) zum Fixieren des Elements (4) in der Halteplatte (2) in die Bohrung (5) einschraubbar oder zum Lösen des Elements (4) von der Halteplatte (2) aus der Bohrung (5) ausschraubbar ist,
wobei sich die Elementaufnahmebohrung (3), die eine Längsachse (7) aufweist, und die Bohrung (5) für das Befestigungsmittel (6), die eine Längsachse und eine Tiefe aufweist, zumindest teilweise entlang der Tiefe der Bohrung (5) für das Befestigungsmittel (6) in einem Überschneidungsbereich überschneiden,
**dadurch gekennzeichnet,**
**dass** der Überschneidungsbereich zumindest teilweise im Bereich des Innengewindes der Bohrung (5) für das Befestigungsmittel (6) angeordnet ist, wobei das Befestigungsmittel (6) im eingeschraubten Zustand in direktem Kontakt zum Element (4) steht und die Längsachse (7) der Elementaufnahmebohrung (3) und die Längsachse der Bohrung (5) für das Befestigungsmittel (6) zueinander parallel ausgerichtet sind.

2. Element-Wechselsystem (1), nach Anspruch 1,
**dadurch gekennzeichnet,**
**dass** durch einen im Bereich des Innengewindes der Bohrung (5) für das Befestigungsmittel (6) angeordneten Überschneidungsbereich das Innengewinde um weniger als 50% reduziert wird.

3. Element-Wechselsystem (1), nach Anspruch 1 oder Anspruch 2,
**dadurch gekennzeichnet,**
**dass** das Befestigungsmittel (6) ein Gewindestift, insbesondere eine Madenschraube (9), ist.

4. Element-Wechselsystem (1), nach einem der vorhergehenden Ansprüche,
**dadurch gekennzeichnet,**
**dass** das Befestigungsmittel (6) mindestens eine Ausdrehsicherung aufweist.

5. Element-Wechselsystem (1), nach Anspruch 4,
**dadurch gekennzeichnet,**
**dass** die Ausdrehsicherung mindestens ein Kunststoffstreifen ist.

6. Element-Wechselsystem (1), nach einem der vorhergehenden Ansprüche,
**dadurch gekennzeichnet,**
**dass** das Element (4) eine Ausnehmung (8) aufweist.

7. Element-Wechselsystem (1), nach einem der vorhergehenden Ansprüche,
**dadurch gekennzeichnet,**
**dass** das Element (4) ein aktives Element (4) ist.

8. Element-Wechselsystem (1), nach einem der vorhergehenden Ansprüche,
**dadurch gekennzeichnet,**
**dass** das Element (4) eine Normalie ist.

9. Element-Wechselsystem (1), nach einem der vorhergehenden Ansprüche,
**dadurch gekennzeichnet,**
**dass** das Element (4) zylindrisch ist.

10. Element-Wechselsystem (1), nach einem der vorhergehenden Ansprüche,
**dadurch gekennzeichnet,**
**dass** das Element (4) ein Stempel ist.

11. Element-Wechselsystem (1), nach Anspruch 10,
**dadurch gekennzeichnet,**
**dass** der Stempel ein Schneidstempel ist.

12. Verfahren zum Wechseln eines Elements eines Werkzeugs, das durch ein Elementwechsel-System (1) fixiert ist, wobei zum Lösen des Elements (4) aus einer in einer Halteplatte (2) angeordneten Elementaufnahmebohrung (3) ein Befestigungsmittel (6) aus einer Bohrung (5) für das Befestigungsmittel (6), die zumindest teilweise ein Innengewinde aufweist, zumindest teilweise herausgeschraubt wird, um nach einer Entnahme des Elements (4) ein Element (4) in die Elementaufnahmebohrung (3) einzusetzen, um anschließend das Befestigungsmittel (6) zur Fixierung des Elements (4) in die Bohrung (5) für das Befestigungsmittel (6) einzuschrauben, wobei sich die Elementaufnahmebohrung (3), die eine Längsachse (7) aufweist, und die Bohrung (5) für das Befestigungsmittel (6), die eine Längsachse und eine Tiefe aufweist, zumindest teilweise entlang der Tiefe der Bohrung (5) für das Befestigungsmittel (6) in einem Überschneidungsbereich überschneiden,
**dadurch gekennzeichnet,**
**dass** der Überschneidungsbereich zumindest teilweise im Bereich des Innengewindes der Bohrung (5) für das Befestigungsmittel (6) angeordnet ist, deren Längsachse zu der Längsachse (7) der Elementaufnahmebohrung (3) parallel ausgerichtet ist und das Befestigungsmittel (6) im eingeschraubten Zustand in direktem Kontakt zum Element (4) steht, so dass das Einschrauben des Befestigungsmittels (6), das zumindest teilweise ein Aussengewinde (12) aufweist, einen Formschluss zwischen dem Element (4) und dem Aussengewinde (12) des Befestigungsmittels (6) bewirkt.

13. Verfahren, nach Anspruch 12,
**dadurch gekennzeichnet,**
**dass** als Element (4) ein aktives Element (4) eingesetzt wird.

14. Verfahren, nach Anspruch 12 oder Anspruch 13,
**dadurch gekennzeichnet,**
**dass** als Element (4) ein Stempel eingesetzt wird.

15. Verfahren, nach einem der Ansprüche 12 bis 14,
**dadurch gekennzeichnet,**
**dass** das Element (4) des Werkzeugs bei einem Stanz- oder Umformwerkzeug eingesetzt wird.

16. Verfahren, nach einem der Ansprüche 12 bis 15,
**dadurch gekennzeichnet,**
**dass** als Element-Wechselsystem (1) ein Element-Wechselsystem (1), gemäß einem der Ansprüche 1 bis 11, eingesetzt wird.
